# EUROPÄISCHE PATENTSCHRIFT

(11) **EP 1 338 573 B1**
(45) Veröffentlichungstag und Bekanntmachung des Hinweises auf die Patenterteilung: **19.03.2008**
(21) Anmeldenummer: 03004007.5
(22) Anmeldetag: 24.02.2003
(51) Int. Cl.: C02F 9/00, B60R 15/00

(54) **Fahrzeug und Verfahren zur Trinkwasserentkeimung**
Vehicle and method for sanitizing drinking water
Véhicule et methode de désinfection d'eau potable

(30) Priorität: 23.02.2002 DE 20202915 U
(43) Veröffentlichungstag der Anmeldung: 27.08.2003
(73) Patentinhaber: Firma SCHRADER-T.+A.-Fahrzeugbau GmbH & Co. KG, 59269 Beckum-Vellern (DE)
(72) Erfinder: Brand, Heinz-Dieter, 59269 Beckum (DE)
(74) Vertreter: Habbel, Ludwig

(56) Entgegenhaltungen:
- GB-A- 2 257 982
- US-A- 3 920 552
- US-A- 3 975 246
- US-A- 5 741 416
- PATENT ABSTRACTS OF JAPAN vol. 014, no. 086 (C-0690), 19. Februar 1990 (1990-02-19) & JP 01 299694 A (FUMIO DENPO;OTHERS: 02), 4. Dezember 1989 (1989-12-04)

## Beschreibung

Die Erfindung betrifft ein Trinkwasserversorgungsfahrzeug.

Trinkwasserversorgungsfahrzeuge stellen eine Art von Tankfahrzeugen dar, bei denen bestimmte hygienische Anforderungen einzuhalten sind. Sie dienen beispielsweise der Trinkwasserversorgung in Dürre- oder Katastrophengebieten, oder sie dienen der Zwischenlagerung von Trinkwasser, um anschließend Trinkwassertanks befüllen zu können; beispielsweise im Bereich von Flughäfen, wo sie zur Befüllung der Trinkwassertanks der Flugzeuge eingesetzt werden.

Bei Überschreitung von bestimmten Bevorratungszeiten, während welcher sich das Trinkwasser im Behälter des Fahrzeugs befindet, und insbesondere unter bestimmten Temperaturbedingungen kann das Wasser in einem Ausmaß verkeimen, dass eine Entkeimung erforderlich ist, bevor es als Trinkwasser abgegeben werden kann.

Ein gattungsgemäßes Fahrzeug ist aus der Druckschrift "Patent Abstracts Of Japan", Bd. 014, Nr. 086 (C-0690), 19. Februar 1990 (1990-02-19) & JP 01 299694 A bekannt. Die Entkeimung erfolgt mittels der Zugabe von Ozon, anschließender Filtrierung durch Aktivkohle und einer abschließenden UV-Bestrahlung des Wassers.

Bei Trinkwasserversorgungsfahrzeugen besteht insbesondere das Problem, dass die strengen Hygienevorschriften einzuhalten sind, die das im Tank enthaltene Wasser betreffen. In der Praxis kommt hinzu, dass der zur Wasserabgabe dienende Abgabeschlauch aus einem Material besteht, welches erheblich schwieriger keimfrei zu halten ist als der Tank selbst oder metallische Rohrleitungen.

Bei der Entkeimung mit chemischen Mitteln ist die Dosierung derartiger Zusatzstoffe problematisch, da bei Unterdosierungen eine Entkeimung nicht zuverlässig sichergestellt werden kann und bei Überdosierungen Beeinträchtigungen des körperlichen Wohlbefindens der dieses Trinkwasser dann trinkenden Personen nicht ausgeschlossen werden können. Dies gilt insbesondere für die Entkeimung von Wasser bei Trinkwasserversorgungsfahrzeugen, da beispielsweise die Temperaturen, denen das Wasser ausgesetzt ist, häufig nicht in einem so engen Rahmen gehalten werden können wie dies bei stationären Anlagen Entkeimungsanlagen viel problemloser möglich ist, so dass die Verkeimungsbedingungen bei Trinkwasserversorgungsfahrzeugen schlechter einschätzbar sind. Zudem ist - je nach Einsatzgebiet des Trinkwasserversorgungsfahrzeugs - die Verfügbarkeit der erforderlichen Entkeimungs-Zusatzstoffe für das Trinkwasser nicht immer problemlos gewährleistbar.

Aus der GB 2 257 982 A oder der US 3 975 246 ist jeweils ein elektrolytisches Verfahren zur Reinigung von Trinkwasser bekannt, welches einer anodischen Oxidation entspricht, also keine chemischen Zusatzstoffe erfordert, sondern das Wasser unmittelbar durch elektrische Energie entkeimt. Die Anwendung dieses Verfahrens in mobilen Einheiten wie z. B. Trinkwasserfahrzeugen ist dabei jeweils nicht vorgesehen.

Aus der US 5 741 416 ist eine transportable Einrichtung bekannt, welche zur Bereitung von Trinkwasser aus nicht trinkbarem Wasser dient, und bei welcher ähnlich wie bei dem gattungsgemäßen, aus "Patent Abstracts Of Japan" bekannten Fahrzeug eine Filtration und die Zugabe von Ozon vorgesehen ist. Diese transportable Einrichtung weist hierzu einen eigenen Ozongenerator auf.

Aus der US 3 920 552 ist eine transportable, auf einem Fahrzeug montierte Einrichtung zur Aufbereitung von Wasser bekannt, wobei Wasser aus der Umgebung aufgenommen, in einem Mischtank mit Luft oder Chemikalien vermischt und anschließend wieder dem übrigen Umgebungswasser zugeführt wird. Mittels dieser Einrichtung soll keine Trinkwasserversorgung ermöglicht werden, sondern es sollen stark verschmutzte Wässer aufbereitet werden, um wieder tierisches Leben darin zu ermöglichen.

Der Erfindung liegt die Aufgabe zugrunde, ein Trinkwasserversorgungsfahrzeug zu schaffen, welches eine einfach zu handhabende, zuverlässig wirkende, rohstoffarme und preisgünstige Entkeimung des Trinkwassers ermöglicht.

Diese Aufgabe wird durch ein Fahrzeug mit den Merkmalen des Anspruchs 1 gelöst.

Als Fahrzeug im Sinne des vorliegenden Vorschlags werden sowohl selbstfahrende Fahrzeuge bezeichnet als auch fahrbare Anhänger, die mittels Zugfahrzeugen gezogen werden können, als auch mehrteilige Fahrzeuge, die beispielsweise aus einem Zugfahrzeug mit einem ersten Trinkwasser-Behälter und einem Anhänger mit einem zweiten Trinkwasser-Behälter gebildet sein können. Ggf. kann der Trinkwasser-Behälter als separate Einheit auf ein Fahrzeugchassis montierbar ausgebildet sein und gegen andere Aufbauten auswechselbar sein.

Die Erfindung schlägt mit anderen Worten als ein erstes Merkmal vor, eine elektrisch wirkende Entkeimung zuverwenden, die als anodische Oxidation bezeichnet wird und bei welcher eine Entkeimung ohne Zusatz von Chemikalien erreicht wird. Die hierzu erforderlichen Geräte arbeiten weitgehend wartungsfrei und ermöglichen daher einen problemlosen Betrieb der Entkeimungseinrichtung. Diese weist ein Elektrodenpaket auf, durch welches das zu entkeimende Wasser geleitet wird, wobei ein elektrischer Gleichstrom an dieses Elektrodenpaket angelegt ist. Die Entkeimungswirkung erfolgt einerseits direkt, durch eine elektrochemische Oxidation von Keimen, weiterhin durch Bildung aktiven Chlors aus im Wasser vorhandenen Chloriden, wodurch eine indirekte elektrische Oxidation stattfindet, und schließlich wird Sauerstoff gebildet.

Vorschlagsgemäß ist weiterhin als zweites Merkmal eine Umwälzanlage vorgesehen, welche das im Behälter befindliche Wasser im Kreislauf durch die Entkeimungs-Einrichtung und in den Behälter zurückführt. Durch eine regelmäßige derartige Entkeimung kann vermieden werden, dass zu hohe Keimzahlen erreicht werden und sich ggf. im Behälter Keimnester an schlecht erreichbaren Stellen ausbilden. So kann eine Depotwirkung bei der Entkeimung ermöglicht werden, indem das Wasser innerhalb des Behälters entkeimt wird, sodass das Wasser für eine bestimmte Zeit anschließend die erforderlich niedrige Keimdichte aufweist, um als Trinkwasser abgegeben werden zu können.

Da die Entkeimung in einem Wasserkreislauf betrieben werden kann, ist es möglich, auch solche Bauelemente zu entkeimen, die hygienisch unter Umständen problematisch sein können. Beispielsweise Schlauchleitungen können hygienisch höhere Anforderungen stellen als Rohrleitungen, wenn sie genauso keimarm gehalten werden sollen. Vorteilhaft kann daher vorgesehen sein, derartige Bauelemente in den Kreislauf einzubinden, wenn eine Kreislaufentkeimung vorgesehen ist.

Ein Abgabeschlauch, der z. B. eine Kupplung zum Anschluss an einen Flugzeugtank aufweist, wird bei einer üblichen, nur im Tank stattfindenden Entkeimung nicht ebenfalls entkeimt. Vorschlagsgemäß ist ein Schlauchabschnitt im Wasserleitungssystem des Fahrzeugs vorgesehen, welcher nämlich einen zur Wasserabgabe dienenden Abgabeschlauch bildet, und es ist als drittes vorschlagsgemäßes Merkmal vorgesehen, diesen Schlauch während der erwähnten Kreislaufentkeimung in diesen Kreislauf einzubinden, derart, dass das Wasser während einer Kreislaufentkeimung den Schlauchabschnitt durchströmt.

Wenn Trinkwasser vom Fahrzeug abgegeben werden soll, kann der Kreislauf unterbrochen werden, so dass dieselbe Pumpe nun nicht als Umwälzpumpe, sondern als Förderpumpe zur Wasserabgabe dient. Der Kreislauf kann daher eine Rohrleitung aufweisen, die unterbrochen ist, ein Absperrorgan aufweist und eine Kupplung, welche mit der schlauchseitigen Kupplung korrespondiert. Bei geschlossenem Absperrorgan kann der Abgabeschlauch von der Kupplung der Rohrleitung getrennt werden, so dass der Kreislauf unterbrochen ist und der Abgabeschlauch nun zur Wasserabgabe genutzt werden kann.

Die Vorteile gegenüber einer chemischen Entkeimung sind selbst unter den - in der Praxis nicht immer gegebenen - Voraussetzungen einer problemlosen Verfügbarkeit und problemlosen Dosierbarkeit der Chemikalie erheblich. Ein vorschlagsgemäßes Fahrzeug ist daher nicht nur in Gebieten mit einer mangelhaften Wasserversorgung oder in Krisengebieten, sondern auch in einer technisch qualifizierten Umgebung vorteilhaft, z. B. im Bereich der Trinkwasserversorgung auf Flughäfen, um dort die in den Flugzeugen vorhandenen Frischwassertanks aufzufüllen:

Im Anschluss an eine Entkeimung mit chemischen Mitteln ist eine gründliche Spülung des Tanks vorgeschrieben. Je nach verwendeter Chemikalie muss die Spülung bis zu 5 mal durchgeführt werden, so dass bei einem 2.000 I fassenden Tank bis zu 10.000 I Spülflüssigkeit verwendet werden müssen. Dies Verfahren weist unter ökologischen und ökonomischen Gesichtpunkten erhebliche Nachteile auf aufgrund der verwendeten Rohstoffmenge, also Wassermenge, und der damit verbundenen Kosten, denn selbstverständlich muss die Reinheit der Spülflüssigkeit mindestens derjenigen des später im Tank vorgesehenen Trinkwassers entsprechen.

Die Verwendung der an sich bekannten, aber für den Einsatz auf Fahrzeugen nicht vorgesehenen Entkeimungs-Einrichtung bei einem Fahrzeug ist insofern überraschend, als die bei Fahrzeugen erzielbaren Vorteile nicht von der stationären Anwendung derartiger Entkeimungs-Einrichtungen herleitbar sind. Wenn elektrisch wirkende Entkeimungs-Einrichtungen beispielsweise bei öffentlich Schwimmbädern eingesetzt werden, so geht die alternativ anwendbare chemische Entkeimung nicht mit der Auflage einher, den gesamten Wasserinhalt der Anlage mehrfach - oder auch nur einmal - zu spülen. Vielmehr werden die Chemikalien wie z. B. Chlor dem Wasser zugesetzt und verbleiben auch während der Benutzung des Wassers darin, kommen also mit den Badegästen sowohl garantiert äußerlich als auch - aufgrund geringer Schluckmengen - üblicherweise innerlich in Kontakt. Der verringerte Einsatz von Rohstoffen bezieht sich bei derartigen stationären Anlagen daher lediglich auf den Entfall der ansonsten verwendeten Chemikalien selbst, nicht jedoch auf die um mehrere Potenzen größere Menge der Spülflüssigkeit.

Wenn zur Entkeimung von an Fahrzeugen vorgesehenen Trinkwasser-Behältern chemisch aggressive Stoffe verwendet werden, beispielsweise eine Chlor-Bleiche, kann sich zudem die Problemstellung einer ausreichenden chemischen Resistenz des am Fahrzeug vorhandenen Tanks ergeben: wird aus hygienischen Gründen gefordert, dass der Tank aus einem für Lebensmittel geeigneten Werkstoff bestehen soll, so ergibt sich bei der Verwendung von Edelstahl, dass dieser Werkstoff durch die Chlor-Bleiche stark angegriffen wird und es zu Lochfraß kommen kann.

Die Entkeimungs-Einrichtung kann vorteilhaft so leistungsstark ausgebildet sein, dass sie in einem Durchfluss-Verfahren das im Behälter befindliche, möglicherweise mit einer unzulässig hohen Keimdichte versehene Wasser entkeimt, während es aus dem Behälter zu einer Ausgabeöffnung abgepumpt wird, also vom Fahrzeug abgegeben wird. So kann sichergestellt werden, dass ordnungsgemäß entkeimtes Wasser ausgegeben wird.

Dabei kann insbesondere vorgesehen sein, die Einrichtung gemeinsam mit der entsprechenden Pumpe zu schalten, so dass bei Einschalten der Pumpe auch die Entkeimungseinrichtung eingeschaltet wird und so automatisch sichergestellt wird, dass stets ordnungsgemäß entkeimtes Wasser ausgegeben wird.

Dabei kann vorgesehen sein, die Entkeimungs-Einrichtung außerhalb des eigentlichen Trinkwasser-Behälters anzuordnen und eine Hin- sowie eine Rückleitung vom und zum Behälter durch diese Entkeimungs-Einrichtung zu führen. Bei einer derartigen Anordnung ist die Entkeimungs-Einrichtung optimal für Wartungsarbeiten zugänglich.

Alternativ kann vorgesehen sein, die Entkeimungs-Einrichtung innerhalb des Trinkwasser-Behälters anzuordnen, sodass eine besonders geschützte und beschädigungssichere Anbringung der Entkeimungs-Einrichtung gegeben ist.

In beiden vorgenannten Fällen der Umwälz-Entkeimung kann vorgesehen sein, um einen "Kurzschluss" im Wasserkreislauf zu vermeiden, dass die Ansaug- und die Auslass-Stelle für das durch die Entkeimungs-Einrichtung geleitete Wasser möglichst weit voneinander beabstandet oder durch ein Trennblech oder dergleichen voneinander getrennt sind, sodass möglichst zuver lässig sichergestellt werden kann, dass der gesamte Behälterinhalt gleichmäßig erfasst und durch die Entkeimungs-Einrichtung geführt wird.

Beispielsweise kann, wenn die Entnahmestelle im hinteren Bereich des Tanks vorgesehen ist, eine VA-Rohrleitung bis in den vorderen Tankbereich zu führen. Auf diese Weise sind die Ein- und Auslaufstellen so weit voneinander entfernt, dass eine unerwünschte Vermengung vermieden wird.

Insbesondere kann vorteilhaft vorgesehen sein, beide Entkeimungsmöglichkeiten, d.h. die Umwälz- und die Durchfluss-Entkeimung zu nutzen. So kann beispielsweise während längerer Stillstandszeiten die Depotwirkung ausgenutzt werden, indem in regelmäßigen Zeitintervallen das Wasser im Kreislauf durch die Entkeimungs-Einrichtung geführt wird, und zusätzlich eine Sicherheit für optimal keimfreies Wasser zu gewährleisten, indem bei der Trinkwasserausgabe das Wasser im Durchfluss entkeimt wird.

Bei der Durchfluss-Entkeimung ist insbesondere vorteilhaft, die Entkeimungs-Einrichtung so in den Wasserfluss einzubinden, dass sichergestellt wird, dass das abgegebene Wasser auch tatsächlich vorher durch die Entkeimungs-Einrichtung geführt ist. So kann die Entkeimungs-Einrichtung beispielsweise als Rohrabschnitt ausgestaltet sein, welcher aus dem eigentlichen Behälterraum zur Trinkwasser-Ausgabeöffnung des Fahrzeugs führt, sodass das Wasser, bevor es zur Ausgabeöffnung gelangt, notwendigerweise die Entkeimungs-Einrichtung durchfließen muss.

Der entkeimungsaktive Rohrabschnitt benötigt nur geringen Bauraum. Es ist daher problemlos möglich, nicht nur Neufahrzeuge vorschlagsgemäß auszugestalten, sondern auch bereits bestehende Fahrzeuge mit einer vorschlagsgemäßen Einrichtung zum Entkeimen des Trinkwassers nachzurüsten. Der entkeimungsaktive Rohrabschnitt kann in nahezu beliebiger Einbaulage vorgesehen werden, wie beispielsweise wahlweise horizontal oder vertikal. Es besteht daher sowohl für Neukonstruktionen eine große konstruktive Freiheit hinsichtlich der Anordnung der Entkeimungseinrichtung, als auch bei Nachrüstungen die Möglichkeit einer Anpassung mit vergleichsweise geringem Aufwand an nahezu jede vorgegebene Fahrzeugkonstruktion.

Vorteilhaft kann die Entkeimungs-Einrichtung mit der öffentlichen Netzspannung betrieben werden, je nach regionalen Gegebenheiten beispielsweise mit etwa 110 V oder etwa 220 - 230 V. Auf diese Weise kann eine besonders zuverlässige EntkeimungsWirkung sichergestellt werden, da eine problemlose Energieversorgung möglich ist und das Trinkwasser dementsprechend häufig auch vor der Ausgabe vom Fahrzeug innerhalb des Fahrzeugs zur Entkeimung umgewälzt werden kann, ohne bordeigene Energiequellen zu belasten.

Vorteilhaft kann vorgesehen sein, die Entkeimungs-Einrichtung mit der Bordspannung des Fahrzeugs zu betreiben. Auf diese Weise ist eine problemlose Entkeimung auch unabhängig von einem öffentlichen Stromnetz möglich. Unter "Bordspannung" wird dabei im Sinne des vorliegenden Vorschlags eine an Bord des Fahrzeugs erzeugte Spannung verstanden: Einerseits kann dies die batteriegestützte Spannung der Fahrzeugelektrik sein, wie die derzeit übliche 12 V- oder 24 V-Spannung oder eine eventuelle, zukünftige 42-V-Spannung, jedoch wird andererseits auch eine Spannung darunter verstanden, welche z.B. mittels Gene-rator an Bord des Fahrzeugs erzeugt wird. Eine derartige Generatorspannung kann in den Bereichen der vorbeschriebenen Netzspannungen, in den Bereichen der vorgenannten batteriegestützten Bordspannungen oder auch in einem anderen Bereich liegen bzw. in die genannten Spannungsbereiche transformiert werden, wobei dann die von diesem Generator erzeugte und ggf. transformierte Spannung die für die Entkeimungs-Einrichtung maßgebliche "Bordspannung" des Fahrzeugs darstellt.

Insbesondere kann vorteilhaft vorgesehen sein, die Entkeimungs-Einrichtung wahlweise sowohl mit der Netzspannungs-Versorgung als auch mit der Bordspannungs-Versorgung betreiben zu können, sodass zunächst die Entkeimungs-Depotwirkung bei Anschluss an das öffentliche Stromnetz genutzt werden kann und anschließend - zum Beispiel während der Fahrt oder während der Trinkwasserabgabe - zusätzliche Entkeimungen erfolgen können.

Die regelmäßige Reinigung des die Elektroden enthaltenden Rohrabschnittes kann vorgesehen sein, wenn beispielsweise aufgrund der Wasserhärte eine Verkalkung der Elektroden zu befürchten ist. Eine regelmäßige Umpolung der Elektroden kann diese Reinigungsintervalle erheblich verlängern. Versuche haben gezeigt, daß diese Intervalle länger als ein Jahr sein können. Dabei kann die Fälligkeit einer derartigen Reinigung automatisch angezeigt werden. So kann beispielsweise mittels an sich bekannter Meßverfahren - wie beispielsweise der Ermittlung des elektrischen Widerstandes zwischen den beiden Elektroden - der zunehmende Verschmutzungsgrad beispielsweise durch eine zunehmende Verkalkung der Elektroden ermittelt werden. Ausgehend von einer mit 100 % eingesetzten Leistungsfähigkeit der Anordnung, kann beispielsweise bei einer entsprechend herabgesetzten Leistungsfähigkeit von 80 % oder 70 % eine Aufforderung in Form eines akustischen oder optischen Signals von der Steuereinheit der Entkeimungseinrichtung ausgelöst werden, so daß der Betreiber des Fahrzeuges dann die entsprechende Reinigung der Elektrodenanordnung der Entkeimungseinrichtung vornehmen kann. Diese Steuerung ist besonders wartungsarm, da anschließend keine Rückstellung dieser elektronischen Überwachung erforderlich ist, vielmehr ist durch die automatische Messung sichergestellt, daß bei ausreichend wieder hergestellter Leistungsfähigkeit der Entkeimungseinrichtung die entsprechende Aufforderung bzw. Signalisierung unterbleibt, bis die Leistungsfähigkeit erneut bis zu dem vorher eingestellten Wert abgesunken ist.

Die Reinigung, insbesondere Entkalkung der Entkeimungseinrichtung kann in an sich bekannter Weise beispielsweise mittels einer schwachen Säure, wie Ameisensäure, Zitronensäure od. dgl. erfolgen. Hierbei ist im Gegensatz zu einer chemischen Entkeimung des gesamten Trinkwasservolumens auf besonders einfache Weise nur eine Reinigung eines sehr kleinen Bereichs des Fahrzeuges nötig, nämlich beschränkt auf den Bereich, in dem die Entkeimungseinrichtung angeordnet ist. Wenn die Entkeimungseinrichtung beispielsweise einen Rohrabschnitt aufweist, in welchem die Elektroden angeordnet sind, so kann vorgesehen sein, diesen Rohrabschnitt demontierbar auszugestalten, so daß der Rohrabschnitt demontiert, gereinigt, gespült und anschließend wieder eingesetzt wird. Die für das Reinigen und Spülen erforderlichen Rohstoffmengen sind, insbesondere angesichts der langen Intervalle, in denen derartige Reinigungen vorgenommen werden müssen, verschwindend gegenüber der während dieser Zeitdauer im Behälter aufgenommenen und von dem Fahrzeug abgegebenen Trinkwassermenge.

Alternativ kann eine "In-situ"-Reinigung vorgesehen sein, bei welcher die Entkeimungseinrichtung am Fahrzeug fest eingebaut verbleibt. Wenn die Entkeimungseinrichtung als Rohrabschnitt ausgestaltet ist, so kann ein Mehrwegeventil vor und nach diesem Rohrabschnitt vorgesehen sein. In der üblichen Betriebsstellung kann vorgesehen sein, die Trinkwassermenge aus dem Behälter durch die Entkeimungseinrichtung bzw. den entsprechenden Rohrabschnitt zu führen und anschließend zu einer Ausgabeöffnung, an welcher das Trinkwasser abgegeben wird.

Durch Umschalten der Ventile bzw. eines der beiden Ventile kann eine Kreislaufschaltung bewirkt werden, in welcher das Wasser aus dem Behälter entnommen, durch den Rohrabschnitt geführt und dort entkeimt wird und in den Behälter wieder zurückgeführt wird. In einer dritten Betriebsstellung dieser beiden Ventile kann ein kleinerer Kreislauf als Reinigungskreislauf geschaffen werden.

Dabei kann kurz vor und kurz hinter dem entsprechenden Rohrabschnitt der Entkeimungseinrichtung eine Reinigungsleitung anschließen, so daß bei entsprechender Ventilstellung durch diese beiden Reinigungsleitungen und den dazwischengeschalteten Rohrabschnitt der Entkeimungseinrichtung eine Reinigungsströmung aufgebaut werden kann, gespeist durch eine eigene Pumpe und ein Vorratsbehälter für die Reinigungsflüssigkeit, wobei diese beiden Reinigungsleitungen im einfachsten Fall Schlauchabschnitte sein könnten und der Vorratsbehälter im einfachsten Fall als offener Eimer ausgestaltet sein kann, in dem eine Tauchpumpe angeordnet ist, an welche eine der beiden Reinigungsleitungen angeschlossen ist, nämlich diejenige, die zum Rohrabschnitt der Entkeimungseinrichtung führt.

Die Reinigung des entsprechenden Rohrabschnittes im eingebauten Zustand hat den Vorteil, daß die vorgenannte automatische Leistungsmessung der Entkeimungseinrichtung während der Reinigung betrieben werden kann und beispielsweise über eine Anzeige der Grad der Leistungsfähigkeit der Entkeimungseinrichtung angezeigt werden kann, so daß, ausgehend von dem vorerwähnten Minimalwert von beispielsweise 70 %, während des Reinigungsvorganges ein Ansteigen der Leistungsfähigkeit bis zur vollständigen Wiederherstellung dieser Leistungsfähigkeit von 100 % vom Benutzer mit verfolgt werden kann. Hierdurch wird eine Zeitersparnis ermöglicht, da nicht nur der Ausbau und die anschließende Montage der Elektroden entfallen kann, sondern die Reinigung der Elektroden kann auch auf die kürzest mögliche Zeit, nämlich bis zur vollständigen Wiederherstellung der Leistungsfähigkeit der Entkeimungseinrichtung beschränkt werden.

Demgegenüber weist die Möglichkeit, die Elektrodenanordnung der Entkeimungseinrichtung ausbauen zu können, den Vorteil auf, daß eine entsprechend aufwendige Ventilanordnung nicht erforderlich ist, welche ansonsten den Anschluß der Reinigungsleitungen ermöglichen würde, und daß auch auf die Reinigungsleistungen und die zusätzliche Pumpe selbst verzichtet werden kann. Angesichts der sehr langen und von der Wasserqualität und den jeweiligen Betriebsbedingungen individuell abhängigen Reinigungsintervallen erfolgt die Reinigung ohnehin so selten, daß die Entkalkung der ausgebauten Elektrodenanordnung in der Praxis problemloser sein kann als die Bereithaltung der entsprechend selten genutzten Reinigungsleitungen und der zusätzlich erforderlichen Pumpe, falls diese nicht am Fahrzeug, sondern in entsprechenden Wartungsräumen bevorratet würden.

In den Zeichnungen ist ein Ausführungsbeispiel der Erfindung rein schematisch dargestellt. Dabei zeigt
- Fig. 1: ein Trinkwasserversorgungsfahrzeug,
- Fig. 2: in gegenüber Fig. 1 vergrößertem Maßstab einen Ausschnitt aus der Verrohrung einschl. einer Entkeimungseinrichtung, und
- Fig. 3: separat einen Rohrabschnitt einer Entkeimungseinrichtung, wie er in einer Verrohrung gemäß Fig. 2 verwendbar ist.

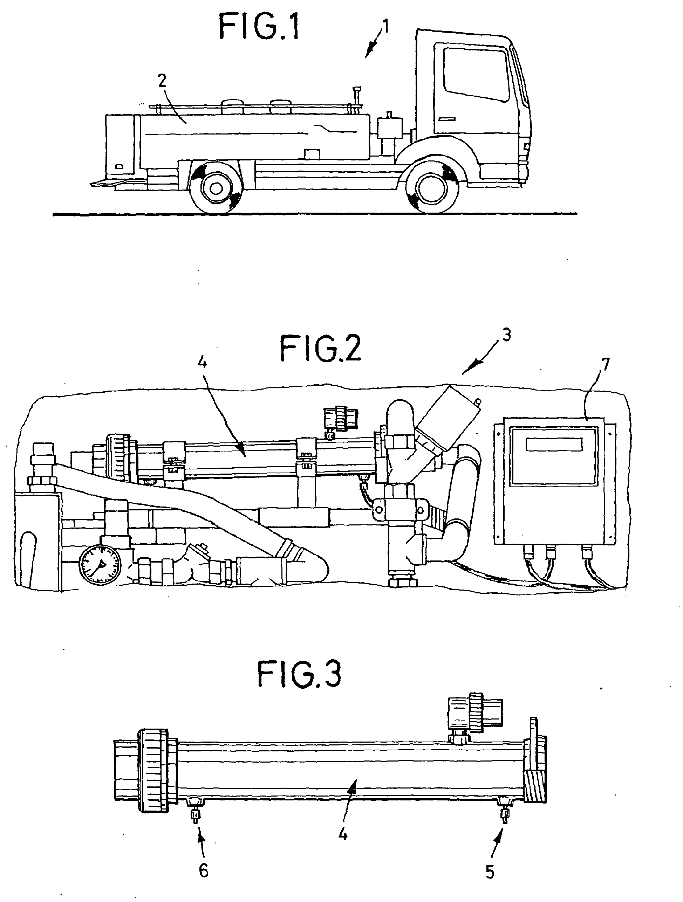

In Fig. 1 ist mit 1 allgemein ein Fahrzeug bezeichnet, welches einen Behälter 2 für Trinkwasser aufweist und welches beispielsweise zum Einsatz auf Flughäfen vorgesehen ist, um Flugzeuge mit Trinkwasser zu versorgen.

Das Fahrzeug 1 weist eine Einrichtung zum Entkeimen des Trinkwassers auf. In Fig. 2 ist diese Entkeimungseinrichtung mit 3 bezeichnet. Die Entkeimungseinrichtung 3 besteht im wesentlichen aus zwei Komponenten, nämlich aus einem Rohrabschnitt 4 und einem Steuergerät 7.

In dem Rohrabschnitt 4, der als Einzelteil in Fig. 3 näher dargestellt ist, ist bei 5 und bei 6 jeweils ein Anschluß für eine Elektrode vorgesehen. Dabei kann vorgesehen sein, innerhalb des Rohrabschnitts 4 mit jeder dieser beiden unterschiedlich gepolten Elektroden eine oder mehrere weitere Elektroden zu verschalten. So können Elektrodenpakete geschaffen werden, die eine wirksame Entkeimung des den Rohrabschnitt 4 durchströmenden Wassers sicherstellen. Eine Entkeimung im Durchlaufverfahren ist auf diese Weise möglich, bei welcher das ggf. keimbeladene Wasser, welches von dem Behälter zu einer Ausgabeöffnung strömt, entkeimt wird, während es den Rohrabschnitt 4 durchströmt.

Das Steuergerät 7 stellt nicht nur die korrekten Strom- bzw. Spannungswerte sicher, die den Elektroden 5 und 6 anliegen sollen, sondern es steuert auch eine sogenannte Reinigungsschaltung. Bei dieser wird intervallweise die Polung der Elektroden gewechselt. Hierdurch wird die Bildung von Ablagerungen an den Elektroden vermieden bzw. erheblich verringert, so daß die Häufigkeit, mit welcher die Elektroden zusätzlich von Ablagerungen gereinigt werden müssen, erheblich reduziert werden kann. Diese als "Reaktivierungsspülung" bezeichnete chemische Reinigung der Elektroden erfolgt vorzugsweise über ein schwaches Säurebad, beispielsweise Zitronensäure und dient insbesondere dem Abbau kalkhaltiger Ablagerungen an den Elektroden.

Der Rohrabschnitt 4 nimmt einen aus der Zeichnung nicht ersichtlichen Elektrodeneinsatz aus Titan auf, welcher mit Edelmetalloxid beschichtet ist, wobei durch Anlegung eines elektrischen Gleichstromes an dieses Elektrodenpaket die folgenden anodischen Reaktionen stattfinden: erstens eine direkte elektrochemische Oxidation von Keimen, zweitens die Bildung aktiven Chlors aus im Wasser vorhandenen Chloriden, wobei eine indirekte elektrochemische Oxidation bewirkt wird, und drittens die Entstehung von Sauerstoff. Auf diese Weise können Krankheitserreger, wie Coli-Bakterien, Legionellen, Viren und Parasiten bekämpft werden, wobei der Rohrabschnitt 4 als Teil der Leitung ausgestaltet sein kann, über welche das Fahrzeug 1 das Wasser aus seinem Behälter 2 abgibt.

Um insbesondere bei längeren Standzeiten und entsprechenden klimatischen Bedingungen, wie hohen Außentemperaturen, eine Verkeimung des Wassers im Behälter 2 zu vermeiden und nicht nur eine Entkeimung während der Wasserabgabe zu ermöglichen, kann ein Kreislauf geschaltet werden, so daß das Trinkwasser durch den Rohrabschnitt 4 nicht unmittelbar zur Ausgabeöffnung des Fahrzeuges 1 fließt, sondern in den Behälter 2 zurückgeführt wird, so daß das im Behälter 2 befindliche Wasser im Kreislauf umgepumpt wird, dabei den Rohrabschnitt 4 durchströmt und entkeimt wird.

## Patentansprüche

1. Fahrzeug,
mit einem Behälter für Trinkwasser,
und mit einer Einrichtung zum Entkeimen dieses Trinkwassers,
**dadurch gekennzeichnet,**
**dass** diese Einrichtung zur Durchführung einer anodischen Oxidation ausgestaltet ist und das Wasser mittels elektrischer Energie entkeimt,
und **dass** eine Umwälzanlage vorgesehen ist, welche das im Behälter befindliche Wasser im Kreislauf durch die Entkeimungs-Einrichtung und in den Behälter zurückführt,
und **dass** ein Schlauchabschnitt im Wasserleitungssystem des Fahrzeugs vorgesehen ist, welcher einen zur Wasserabgabe dienenden Abgabeschlauch bildet und in den Kreislauf einbindbar ist, derart, dass das Wasser während einer Kreislaufentkeimung den Schlauchabschnitt durchströmt.

2. Fahrzeug nach Anspruch 1,
**dadurch gekennzeichnet,**
**dass** eine Leitung von der Einrichtung zu einer Ausgabeöffnung des Behälters führt, welche für die Ausgabe des Trinkwassers vorgesehen ist,
und **dass** die Einrichtung derart leistungsfähig ausgestaltet ist, dass sie im Rahmen einer Durchfluss-Entkeimung das aus dem Behälter abzugebende Trinkwasser entkeimt.

3. Fahrzeug nach Anspruch 1 oder 2,
**dadurch gekennzeichnet,**
**dass** die Einrichtung mit einer Netzspannung eines öffentlichen Stromnetzes betreibbar ist - wie etwa 110 Volt oder etwa 220 Volt.

4. Fahrzeug nach einem der vorhergehenden Ansprüche,
**dadurch gekennzeichnet,**
**dass** die Einrichtung mit der Bordspannung des Fahrzeugs betreibbar ist - wie etwa 12, etwa 24 oder etwa 42 Volt.

5. Fahrzeug nach einem der vorhergehenden Ansprüche,
**dadurch gekennzeichnet,**
**dass** die Einrichtung einen Rohrabschnitt mit Elektroden versehenen Rohrabschnitt aufweist, der außerhalb des Behälters angeordnet ist.

6. Fahrzeug nach Anspruch 5,
**dadurch gekennzeichnet,**
**dass** der Rohrabschnitt auswechselbar ist, wobei in Strömungsrichtung vor und hinter dem Rohrabschnitt Absperrelemente vorgesehen sind, derart, daß der Rohrabschnitt bei geschlossenen Absperrelementen aus dem Fahrzeug ohne Trinkwasserverlust auch bei gefülltem Behälter entnehmbar ist.

## Claims

1. Vehicle
having a container for drinking water,
and having a means of sanitizing this drinking water,
**characterised in that**
this sanitizing means is designed to carry out an anodic oxidation and sanitizes the water by means of electrical energy
and that a circulating system is provided which circulates the water in the container back through the sanitizing means and into the container and that a length of hose is disposed in the water circulation system of the vehicle, forms a hose for dispensing water and can be so incorporated into the circuit that the water flows through the length of hose while being sanitized in the circuit.

2. Vehicle in accordance with claim 1,
**characterised in that**
a pipe runs from the sanitizing means to a dispensing hole in the container, which hole is provided for dispensing the drinking water
and that the sanitizing means is designed to sanitize the drinking water to be dispensed from the container as the water flows through the sanitizing means.

3. Vehicle in accordance with claim 1 or 2,
**characterised in that**
the sanitizing means can be operated with a voltage - for example, 110 volts or 220 volts - from a public power supply.

4. Vehicle in accordance with any one of the foregoing claims,
**characterised in that**
the sanitizing means can be operated with the voltage - for example, 12, 24 or 42 volts - generated by the vehicle itself.

5. Vehicle in accordance with any one of the foregoing claims,
**characterised in that**
the sanitizing means incorporates a length of hose fitted with electrodes and disposed outside the container.

6. Vehicle in accordance with claim 5,
**characterised in that**
the length of hose can be exchanged and shut-off elements are fitted upstream and downstream of the length of hose so that, when the shut-off elements are closed, the length of hose can be removed from the vehicle without losing drinking water, even when the container has been filled.

## Revendications

1. Véhicule
avec réservoir d'eau potable,
et un équipement destiné à désinfecter cette eau potable,
**caractérisé en ce que**
cet équipement a été configuré pour réaliser une oxydation anodique et qu'il désinfecte l'eau au moyen d'énergie électrique,
et **en ce qu'**une installation recirculation est prévue qui oblige l'eau présente dans le réservoir à circuler en circuit fermé : à traverser l'équipement de désinfection et à revenir au réservoir,
et **en ce qu'**un segment de flexible est prévu dans le circuit de conduites d'eau du véhicule ; il forme un flexible de distribution d'eau et se laisse intégrer dans le circuit de sorte que l'eau, pendant la désinfection en circuit fermé, circule dans ce segment de flexible.

2. Véhicule selon la revendication 1,
**caractérisé en ce**
**qu'**une conduite part de l'équipement vers un orifice de distribution du réservoir prévue pour distribuer de l'eau potable,
et en ce que l'équipement est configuré performant au point que, dans le cadre d'une désinfection en circulation, il désinfecte l'eau potable à distribuer en provenance du réservoir.

3. Véhicule selon la revendication 1 ou 2
**caractérisé en ce que**
l'équipement peut être exploité sous la tension débitée par le réseau d'électricité public, soit par exemple sous 110 ou par exemple sous 220 volts.

4. Véhicule selon l'une des revendications précédentes,
**caractérisé en ce que**
l'équipement peut être exploité sous la tension de bord du véhicule,
soit par exemple sous 12 ou par exemple sous 24 ou par exemple sous 42 volts.

5. Véhicule selon l'une des revendications précédentes,
**caractérisé en ce que**
l'équipement présente, agencé hors du réservoir, un segment de tube équipé d'électrodes.

6. Véhicule selon la revendication 5,
**caractérisé en ce que**
le segment de tube est interchangeable, des éléments de fermeture étant prévus en amont et en aval du segment de tube dans le sens de l'écoulement, de sorte que, après avoir fermé ces éléments, il est possible de sortir le segment de tube du véhicule sans perte d'eau potable, aussi lorsque le réservoir est plein.
